# EUROPÄISCHE PATENTSCHRIFT

(11) **EP 1 132 690 B1**
(45) Veröffentlichungstag und Bekanntmachung des Hinweises auf die Patenterteilung: **07.07.2004**
(21) Anmeldenummer: 01103816.3
(22) Anmeldetag: 16.02.2001
(51) Int. Cl.: F24F 12/00

(54) **Vorrichtung zur Temperierung und/oder Belüftung eines Raumes**
Device for tempering and/or ventilating a room
Dispositif permettant de tempérer et/ou de ventiler une pièce

(30) Priorität: 09.03.2000 DE 10010832
(43) Veröffentlichungstag der Anmeldung: 12.09.2001
(73) Patentinhaber: KRANTZ-TKT GmbH, 51465 Bergisch-Gladbach (DE)
(72) Erfinder: Makulla, Detlef, Dipl.-Ing., 51491 Overath (DE); Sodec, Franc, Dr.-Ing., 52146 Würselen (DE)
(74) Vertreter: Bauer, Dirk, Dipl.-Ing. Dipl.-Kfm.

(56) Entgegenhaltungen:
- EP-A- 0 816 769
- DE-A- 3 006 318
- DE-U- 8 700 632
- US-A- 4 462 459
- US-A- 5 024 263

## Beschreibung

Die Erfindung betrifft eine Vorrichtung zur Temperierung und/oder Belüftung eines Raumes in einem Gebäude und zur Anordnung in oder in der Nähe einer Fassade, die den Raum von der äußeren Umgebung eines Gebäudes trennt, mit
- einem Außenlufteinlaß, durch den Außenluft über einen ersten Wärmetauscher zur Energierückgewinnung aus der Abluft und über einen zweiten Wärmetauscher zur weiteren Temperierung führbar und durch einen Zuluftauslaß in den Raum abgebbar ist,
- einem Ablufteinlaß, durch den Abluft aus dem Raum über den ersten Wärmetauscher zu einem Fortluftanschluß führbar und dort an die Umgebung abgebbar ist,
- einem im Abluftstrom vor dem ersten Wärmetauscher abzweigenden und im Zuluftstrom hinter diesem einmündenden Umluftbypass, durch den Abluft als Umluft zu dem Zuluftauslaß führbar ist, wobei der freie Querschnitt des Umluftbypass mittels einer Verstelleinrichtung veränderbar ist, und
- mehreren Luftfördereinrichtungen für eine aktive Luftführung.

Eine derartige Vorrichtung, für die auch die Bezeichnung "Dezentrales Brüstungsgerät" gebräuchlich ist, ist beispielsweise aus der DE 87 00 632 U1 bekannt. Die deckennah abgesaugte Abluft wird dort über einen Wärmetauscher zur Wärmerückgewinnung geführt und sodann von einem Abluftventilator als Fortluft an die Umgebung abgegeben. Die Außenluft wird durch einen Außenlufteinlaß von einem dahinter angeordneten Außenluftventilator angesaugt und anschließend über den Wärmetauscher zur Wärmerückgewinnung geführt, um anschließend in einem Heiz- oder Kühlelement nach Wunsch nachtemperiert und letztlich als Zuluft an den zu temperierenden bzw. zu belüftenden Raum abgegeben zu werden.

Der die Abluft zu dem Wärmetauscher zur Wärmerückgewinnung führende Luftkanal weist einen Abzweig auf, von dem Abluft ohne weitere Behandlung als sogenannte Umluft direkt dem Zuluftstrom vor dem Heiz- und/oder Kühlelement zugeführt werden kann. Zur Förderung dieser Umluft ist in diesem Umluftbypass ein separater Umluftventilator angeordnet.

Ein Nachteil der bekannten Vorrichtung besteht darin, daß der apparative Aufwand und daher auch die Herstellkosten unter Verwendung von drei separaten Ventilatoren hoch ist. Auch ist der regelungstechnische Aufwand sehr groß, wenn beispielsweise unter Beibehaltung eines bestimmten Umluftanteils in der Zuluft der Zuluftvolumenstrom gesteigert werden soll.

Des weiteren bietet die bekannte Vorrichtung nicht die Möglichkeit, Außenluft bedarfsweise ganz oder teilweise an dem Wärmetauscher zur Wärmerückgewinnung vorbeizuführen. Gleichfalls ist es nicht vorgesehen, einen Teil der Abluft nicht über den Wärmetauscher zur Wärmerückgewinnung zu leiten. Bei Vorrichtungen hingegen, bei denen diese Möglichkeit besteht, erweist es sich als nachteilig, daß für die vorgenannten Bypässe Bauraum verloren geht, der für eine größere Ausbildung des Wärmetauschers nicht zur Verfügung steht. Aus Gründen größtmöglicher Flexibilität ist es daher wünschenswert, sowohl eine Variante mit den vorgenannten Bypässen als auch eine ohne diese anbieten zu können, ohne daß größere Umbauten an der Vorrichtung notwendig sind.

Ferner ist aus der DE-A-30 06 318 eine Vorrichtung bekannt, bei der im Abluftstrom ein Umluftbypass nach dem ersten Wärmetauscher angeordnet ist.

Der Erfindung liegt somit die Aufgabe zugrunde, eine konstruktiv möglichst einfach aufgebaute Vorrichtung vorzuschlagen, mit der dennoch auf einfache Weise unterschiedliche Anforderungen auch an die Wärmerückgewinnungscharakteristik erfüllt werden können.

Ausgehend von einer Vorrichtung der eingangs beschriebenen Art (DE-8700632U), wird diese Aufgabe erfindungsgemäß dadurch gelöst, daß eine Abluftfördereinrichtung zwischen dem Ablufteinlaß und dem Abzweig des Umluftbypass aus einem Abluftkanal und eine Zuluftfördereinrichtung zwischen einer Einmündung des Umluftbypass in einen Zuluftkanal und dem Zuluftauslaß angeordnet ist.

Durch die erfindungsgemäße Anordnung der Fördereinrichtung kann auf eine dritte, im Umluftbypasskanal angeordnete Fördereinrichtung vollständig verzichtet werden. Die erfindungsgemäße Anordnung hat des weiteren den Vorteil, daß bei einer Veränderung der Förderleistung durch den Nutzer, beispielsweise durch die Variation der Drehzahl der Fördereinrichtungen, beide parallel angesteuert werden können, ohne daß sich die Aufteilung des Zuluftvolumenstroms in Außenluftanteil und Umluftanteil ändert. Würde hingegen beispielsweise die Abluftfördereinrichtung zwischen dem ersten Wärmetauscher und dem Fortluftauslaß angeordnet, so müßte bei einer Änderung des Verhältnisses von Umluft zu Außenluft die Förderleistung dieser Fördereinrichtung ebenfalls geändert werden, damit sich keine ungewollten Veränderungen der Teilvolumenströme in der Vorrichtung ergeben und die Luftbilanz für den Raum ausgeglichen ist, d.h. Außenluftvolumenstrom gleich Fortluftvolumenstrom und Zuluftvolumenstrom gleich Abluftvolumenstrom. Diese separate Steuerung bzw. Regelung der Abluftfördereinrichtung in Abhängigkeit des Außen-/Umluftanteils kann durch die erfindungsgemäße Einbausituation eingespart werden. Außerdem besteht die Möglichkeit, beide Fördereinrichtungen im reinen Umluftbetrieb in einer Reihenschaltung zu betreiben, wodurch sich besonders große Volumenströme realisieren lassen. Durch den dadurch erzielbaren besseren Wärmeübergang im Luft-Wasserwärmetauscher wird dieser effektiver und baut bei gleicher Leistungsabgabe kleiner. Alternativ zur Reihenschaltung ist auch die Abschaltung einer Fördereinrichtung im reinen Umluftbetrieb möglich.

Eine Ausgestaltung der erfindungsgemäßen Vorrichtung besteht darin, daß die Außenluft über einen Luftbypass an dem ersten Wärmetauscher vorbei zum zweiten Wärmetauscher führbar ist.

Eine solche Außenluftführung ist insbesondere dann sinnvoll, wenn der zur Wärmeabfuhr erforderliche Luftvolumenstrom wesentlich größer als der aus hygienischen Gründen erforderliche Außenluftvolumenstrom ist. Dies ist insbesondere bei Verwaltungsgebäuden mit einer üblichen Belegung von einer Person pro 10 m² Bodenfläche der Fall. Hier ist bei abnehmendem Kühlfall zuerst eine Reduktion des Außenluftanteils zugunsten eines höheren Umluftanteils sinnvoll. Erst wenn die Wärmeverluste des Raums die Wärmegewinne durch interne Belastungen überwiegen, wird die Wärmerückgewinnung in Betrieb genommen und die Außenluft über den Wärmerückgewinnungswärmetauscher geleitet. Aus diesem Grunde ist es vorteilhaft, wenn das Verhältnis des durch den ersten Wärmetauscher geführten Außenluftvolumenstroms zu dem durch den Außenluftbypass geführten Volumenstrom einstellbar ist.

Eine Weiterbildung der erfindungsgemäßen Vorrichtung besteht darin, daß eine Wärmerückgewinnungs-Bypassklappe für die Außenluft wahlweise den Einlaßquerschnitt des ersten Wärmetauschers oder den Außenluftbypass versperrt oder in Zwischenstellung eine variable Verteilung der Außenluft auf den ersten Wärmetauscher und den Außenluftbypass erlaubt. Eine derartige kombinierte Wärmerückgewinnungs-Bypassklappe ersetzt zwei separate Klappen im Strang des Wärmetauschers einerseits und im Außenluftbypasskanal andererseits und stellt daher eine Möglichkeit zur Reduzierung der Herstellkosten dar.

Die Erfindung weiter ausgestaltend ist vorgesehen, daß Abluft über einen Abluftbypass an dem ersten Wärmetauscher vorbei führbar ist. Aufgrund der guten Isolation heutiger Gebäude ist es in der Regel nicht erforderlich, die gesamte in der Abluft enthaltene Wärme zurückzugewinnen, so daß mit Hilfe des Bypass eine Druckentlastung der Abluftfördereinrichtung erzielt werden kann.

Dabei ist es sinnvoll, wenn der Abluftbypass einen unveränderlichen Querschnitt besitzt und vor einer Fortluftklappe in einen Kanal mündet, durch den Abluft durch den ersten Wärmetauscher führbar ist.

Die der Erfindung zugrunde liegende Aufgabe wird des weiteren - ausgehend von einer Vorrichtung der eingangs beschriebenen Art - auch dadurch gelöst, daß der erste Wärmetauscher gemeinsam mit dem Außenluftbypass und/oder dem Abluftbypass eine als solche aus der Vorrichtung entnehmbare Baueinheit bildet.

Zum einen kann hierdurch die gesamte Baueinheit, d.h. insbesondere der Wärmetauscher, und die eventuell in den Bypässen vorhandenen Einbauten, wie z.B. Klappen, gereinigt werden.

Zum anderen bietet die Ausbildung der vorgenannten entnehmbaren Baueinheit den Vorteil, daß anstelle eines mit einem oder zwei Bypasskanälen kombinierten Wärmetauschers auch ein mit nur einem bzw. mit gar keinem Bypasskanal kombinierter Wärmetauscher eingesetzt werden kann. In diesem Fall kann der Wärmetauscher größer als bei einer Kombination mit einem oder mehreren Bypässen ausgebildet werden, da der durch den bzw. die wegfallenden Bypass bzw. Bypässe frei werdende Raum ebenfalls vom Wärmetauscher eingenommen werden kann.

Sinnvoll ist eine derartige bypassfreie Wärmetauschereinheit insbesondere bei Räumen mit hoher Personenbelegung, wie dies beispielsweise bei Bildungsstätten oder Besprechungszimmern der Fall ist. In diesen Fällen ist ein Umluftbetrieb aufgrund des hohen Frischluftbedarfs nicht sinnvoll, so daß die Zuluft immer zu 100 % aus Außenluft besteht. Durch einen Austausch der mit Bypässen kombinierten Wärmetauscherbaueinheit durch eine solche ohne Bypässe kann ein größerer Außenluftvolumenstrom durch den Wärmetauscher geführt werden. Außerdem erlaubt eine solche Ausführung eine Erhöhung des Wärmerückgewinnungsbetrages bei reinem Außenluftbetrieb. Zur Deckung des Energiebedarfs des Raums kann ein erhöhter Energierückführungsbetrag in gewissen Betriebszuständen sinnvoll sein.

Die erfindungsgemäße Vorrichtung zeichnet sich daher durch eine große Flexibilität hinsichtlich der geforderten Einsatzbedingungen aus. Unter Beibehaltung ein und derselben Grundkonzeption läßt sich durch einfachen Austausch einer einzigen Baueinheit sowohl eine Variante realisieren, bei der ein Betrieb mit einem großen Umluftanteil sinnvoll ist (geringe Personenbelegung), als auch eine Variante, bei der aufgrund einer hohen Personenbelegung zu Zeiten regulärer Nutzung ein Umluftbetrieb kaum möglich und daher eine große Wärmerückgewinnungsquote anzustreben ist.

Eine besonders vorteilhafte Ausgestaltung der Erfindung besteht darin, daß eine Seitenwand des Außenluftbypass und/oder des Abluftbypass von jeweils einer Wand eines Gehäuses der Vorrichtung und/oder des Wärmetauschers gebildet wird. Auf eine bzw. zwei zusätzliche Wandteile zur Bildung jeweils eines Bypasskanals kann in diesem Fall verzichtet werden, weshalb der Bauaufwand weiter reduziert und der Wechsel zwischen einer Version mit oder ohne Bypasskanäle/n vereinfacht wird.

Eine bevorzugte Ausführungsform der erfindungsgemäßen Vorrichtung besteht darin, daß die Baueinheit quaderförmig ist und aus einem quaderförmigen Plattenwärmetauscher und einem jeweils dieselbe Grundfläche aufweisenden quaderförmigen Außenluftbypass und Abluftbypass besteht, wobei die Strömungen durch den Plattenwärmetauscher den Außenluftbypass und den Abluftbypass in zueinander parallelen Ebenen und die Strömungen durch den Außenluftbypass und den Abluftbypass um einen Winkel von 90° miteinander einzuschließen.

Um bei sämtlichen möglichen Lastfällen sowie während des gesamten Jahres die gewünschte Temperatur der Zuluft auf energetisch günstigste Weise einstellen zu können, wird vorgeschlagen, daß der zweite Wärmetauscher ein Heizregister und ein Kühlregister aufweist.

Schließlich ist gemäß der Erfindung noch vorgesehen, daß in einem Außenluftstutzen zwei Einlaßöffnungen vorhanden sind, von denen eine Luft aus einem Zwischenraum zwischen der Fassade und einer dieser vorgelagerten Außenschale und eine andere Außenluft aus der die Außenschale umgebenden Umgebung ansaugt, wobei die wirksamen Öffnungsquerschnitte beider Einlaßöffnungen unabhängig voneinander einstellbar sind. Auf diese Weise kann in der Übergangszeit angewärmte Luft beispielsweise zwischen einer äußeren Glasschale des Gebäudes und der eigentlichen tragenden Gebäudewand genutzt werden, um ein Nachheizen der Zuluft vermeiden zu können.

Die Erfindung wird nachfolgend anhand mehrerer Ausführungsbeispiele der Vorrichtung erläutert, die in der Zeichnung dargestellt ist. Es zeigt:
- Fig. 1: einen Schnitt durch einen Raum eines Gebäudes mit einer vor einer Brüstung einer Fassade installierten Vorrichtung zur Temperierung und/oder Belüftung;
- Fig. 2: ein Schaltbild der Vorrichtung gemäß Fig. 1;
- Fig. 3: wie Fig. 1, jedoch mit einem Gebäude mit vorgehängter Außenschale;
- Fig. 4: einen Vertikalschnitt durch die Vorrichtung gemäß Fig. 1;
- Fig. 5: einen Horizontalschnitt durch die Vorrichtung gemäß Fig. 1;
- Fig. 6: wie Fig. 5, jedoch einer alternativen Ausführung der Vorrichtung;
- Fig. 7: eine schematische Darstellung einer aus Wärmetauscher, Abluftbypass und Außenluftbypass gebildeten Baueinheit mit einer kombinierten Wärmerückgewinnungs-Bypassklappe und
- Fig. 8: wie Fig. 2, jedoch mit einer kombinierten Wärmerückgewinnungs-Bypassklappe.

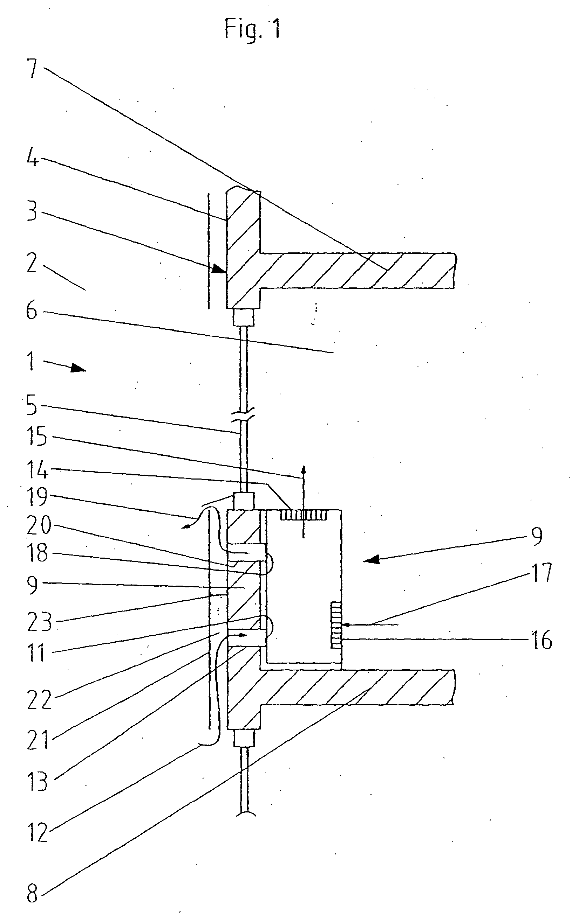

Fig. 1 zeigt in schematischer Ansicht einen vertikalen Teilschnitt durch ein Gebäude 1, das zu dessen äußerer Umgebung 2 durch eine Fassade 3 begrenzt wird, die wiederum aus Wandabschnitten 4 und Fensterabschnitten 5 besteht. Ein Raum 6 in dem Gebäude 1 wird durch eine obere Geschoßdecke 7 und eine untere Geschoßdecke 8 begrenzt. In dem Raum 1 ist unmittelbar vor einer Brüstung 9 unterhalb eines Fensters eine Vorrichtung 10 angeordnet, die zur Temperierung und Belüftung des Raumes 6 dient und in dieser Form üblicherweise als "dezentrales Brüstungsgerät" bezeichnet wird.

Die Vorrichtung 10 besitzt einen Außenlufteinlaß 11, über den Außenluft entlang des Pfeils 12 durch einen die Brüstung 9 durchdringenden Rohrstutzen 13 in das Innere der Vorrichtung geführt werden kann. Die Außenluft wird in der Vorrichtung 10 auf eine später noch näher erläuterte Weise konditioniert und dabei u.U. mit Abluft aus dem Raum 6 gemischt und anschließend durch einen an der Oberseite der Vorrichtung 10 angeordneten Zuluftauslaß 14 in Richtung des Pfeils 15 an den Raum 6 abgegeben. Im unteren Bereich ist die Vorrichtung 10 mit einem Ablufteinlaß 16 versehen, durch den in Richtung des Pfeils 17 Abluft aus dem Raum 6 absaugbar ist. Die Abluft wird im Inneren der Vorrichtung 10 entweder zu einem rückseitig der Vorrichtung 10 angeordneten Fortluftauslaß 18 geführt, um von dort entlang eines Pfeils 19 durch einen die Brüstung 9 durchdringenden Rohrstutzen 20 in die Umgebung 2 zu gelangen. Der Brüstung 9 ist außenseitig ein Verkleidungselement 21 vorgelagert, so daß sich zwischen diesem und der Brüstung 9 ein Luftzwischenraum 22 ausbildet. Mit Hilfe eines Schotts 23 wird dafür gesorgt, daß die aus dem oberen Rohrstutzen 20 austretende Fortluft nach oben strömt und sich nicht nach Art eines Kurzschlusses mit der von unten einströmenden und durch den Rohrstutzen 13 eintretenden Außenluft vermischen kann.

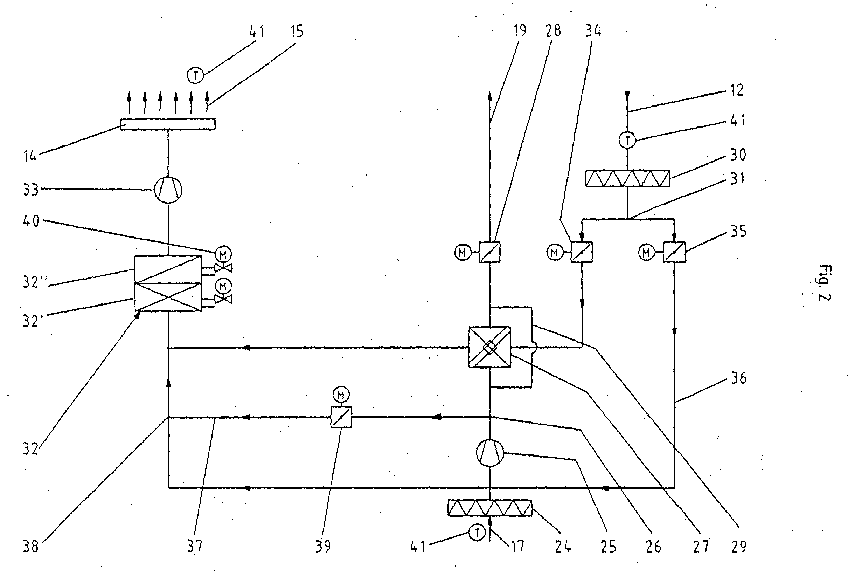

Fig. 2 zeigt das Schaltschema der Vorrichtung 10. Die durch einen Ablufteinlaß 16 eintretende Abluft (Pfeil 17) wird zunächst durch ein Filter 24 geführt und gelangt dann in eine Abluftfördereinrichtung 25. Dieser in Strömungsrichtung nachgeschaltet ist ein Abzweig 26, von dem aus ein Teilstrang durch einen ersten Wärmetauscher 27 und über eine motorisch betätigbare Fortluftklappe 28 zu dem nicht näher dargestellten Fortluftauslaß geführt wird, durch den die Fortluft (Pfeil 19) an die Umgebung abgegeben wird. Ein Teil der Abluft wird über einen Abluftbypass 29 an dem Wärmetauscher 27 vorbeigeführt, so daß der Druckverlust für die Abluftfördereinrichtung 25 auch bei 100 %igem Fortluftbetrieb gering gehalten werden kann. Der Abluftbypass 29 besitzt einen nicht veränderbaren Querschnitt.

Durch einen ebenfalls nicht näher dargestellten Außenlufteinlaß strömt Außenluft entlang des Pfeils 12 durch ein Filter 30, um danach zu einem Abzweig 31 zu gelangen. Von dort wird die Außenluft entweder über den ersten Wärmetauscher 27 zur Energierückgewinnung und über einen zweiten Wärmetauscher 32 zur Nachtemperierung zu einem Zuluftauslaß 14 geführt, aus dem die Zuluft gerichtet entsprechend den Pfeilen 15 in den Raum eintritt.

Zwischen dem zweiten Wärmetauscher 32, der ein Heizregister 32' und ein Kühlregister 32" aufweist, und dem Zuluftauslaß befindet sich eine Zuluftfördereinrichtung 33, die - wie die Abluftfördereinrichtung 25 - als Ventilator ausgebildet ist.

Je nach Stellung einer Wärmerückgewinnungsklappe 34 und einer Bypassklappe 35 besteht für die Außenluft alternativ auch die Möglichkeit - ausgehend von dem Abzweig 31 - über einen Außenluftbypass 36 an dem ersten Wärmetauscher 27 vorbeigeführt zu werden, um schließlich ebenfalls in den zweiten Wärmetauscher 32 zu gelangen.

Ausgehend von dem Abzweig 26 in der Abluftleitung, verläuft ein Umluftbypass 37 zu einer Einmündung 38 in die Außenluftleitung, wodurch die Möglichkeit besteht - je nach Stellung einer Umluftklappe 39 und der Fortluftklappe 28 -, Abluft als Umluft direkt dem zweiten Wärmetauscher 32 bzw. sodann dem Zuluftauslaß zuzuführen.

Sämtliche Klappen 28, 34, 35 und 39 sind motorisch verstellbar, was gleichfalls für Ventile 40 der Register 32', 32" des zweiten Wärmetauschers 32 gilt. Um eine automatische Betriebsweise der Vorrichtung zu ermöglichen, sind die Temperaturen der Abluft, der Außenluft und der Zuluft mit Hilfe von Temperaturmessern 41 kontinuierlich bestimmbar. Die Abluftfördereinrichtung 25 und die Zuluftfördereinrichtung 33 sind in ihrer Drehzahl, d.h. ihrer Förderleistung, veränderbar.

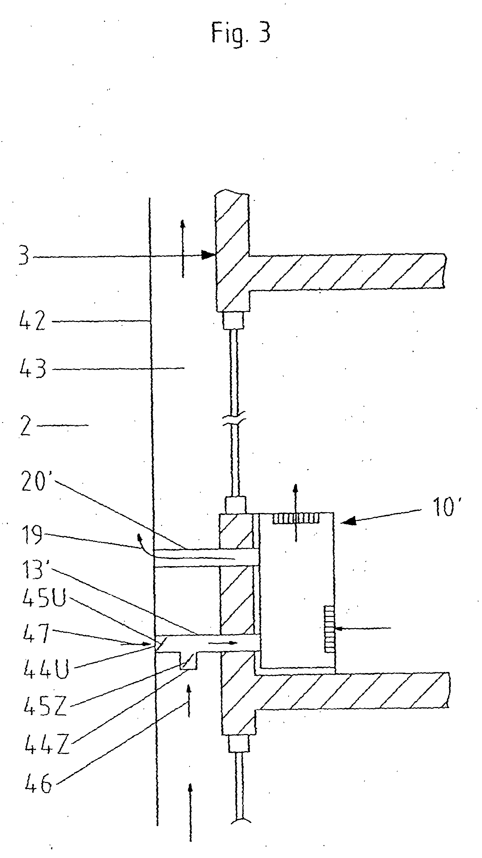

Fig. 3 zeigt eine alternative Einbausituation der Vorrichtung 10', wobei in diesem Fall vor der Fassade 3 in einem Abstand parallel zu letzterer eine Außenschale 42 aus Glaselementen angeordnet ist. Durch die Fassade 3 und die Außenschale 42 wird ein mit Luft gefüllter Zwischenraum 43 gebildet, der zumindest an seiner Unterseite über eine Zuströmöffnung mit der Umgebung 2 verbunden ist. Der Fortluftstutzen 20' ist in diesem Fall durch den Zwischenraum 43 hindurchgeführt, so daß die Fortluft (Pfeil 19) in die Umgebung 2 abgegeben wird. Der Außenluftstutzen 13' besitzt zwei Einlaßöffnungen 44U und 44Z, die jeweils mit Hilfe einer Klappe 45U und 45Z verschließbar sind. Einlaßöffnung 45Z korrespondiert mit dem Zwischenraum 43, so daß es möglich ist, durch Sonneneinstrahlung vortemperierte Luft (Pfeil 46) aus dem Zwischenraum 43 anzusaugen. Ist eine derartige Außenluftvorwärmung z. B. im Sommer nicht erwünscht, kann durch die mit der Umgebung 2 korrespondierende Einlaßöffnung 44U Außenluft entsprechend dem Pfeil 47 direkt aus der Umgebung 2 angesaugt werden. Im übrigen unterscheidet sich der Aufbau der in Fig. 3 dargestellten Vorrichtung 10' nicht von der in den Fig. 1 und 2 erläuterten Vorrichtung 10.

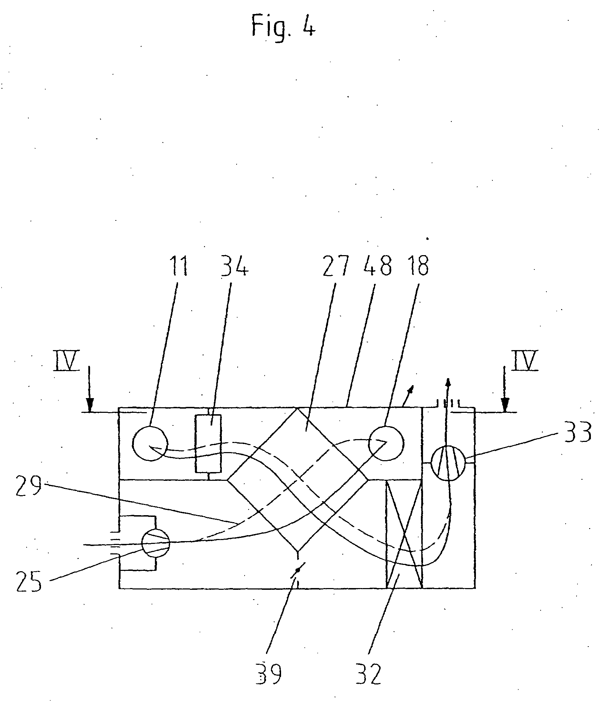

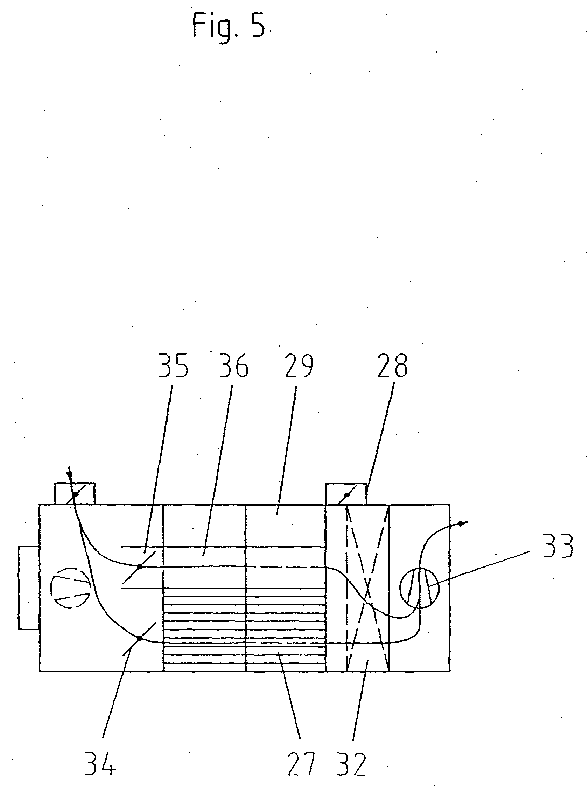

Die Fig. 4 und 5 zeigen in einem Vertikal- bzw. Horizontalschnitt den inneren Aufbau der Vorrichtung 10 bzw. 10'. Der der Energierückgewinnung aus der Abluft dienende erste Wärmetauscher 27 ist als quaderförmiger Plattenwärmetauscher ausgebildet und, auf einer Kante stehend, in ein ebenfalls quaderförmiges und liegend angeordnetes Gehäuse 48 eingebaut. Von dem Außenluftanschluß 11 gelangt die Außenluft entweder über die Wärmerückgewinnungsklappe 34 und den ersten Wärmetauscher 27 oder alternativ hierzu über die Bypassklappe 35 und den Abluftbypass 36 jeweils zu dem zweiten Wärmetauscher 32 und wird sodann über die Zuluftfördereinrichtung 33 in den zu temperierenden Raum geleitet.

Die Abluft aus dem Raum wird mit Hilfe der Abluftfördereinrichtung 25 zu einem (größeren) Teil ebenfalls durch den ersten Wärmetauscher 27 zu dem Fortluftauslaß 18 und zu einem (kleineren) Teil, der in Fig. 4 gestrichelt dargestellt ist, zu dem Fortluftauslaß 18 geführt. Das Verhältnis zwischen den beiden vorgenannten Teilen ist im vorliegenden Fall konstant.

Wie sich insbesondere der Fig. 5 entnehmen läßt, sind die miteinander fluchtend angeordneten Bauteile Wärmetauscher 27, Außenluftbypass 36 und Abluftbypass 29 in dieser Reihenfolge hintereinander angeordnet, wobei die Strömung durch den Außenluftbypass 36 schräg von links oben nach rechts unten und die Strömung durch den Abluftbypass 29 schräg von links unten nach rechts oben erfolgt. Der Wärmetauscher 27 wird von der Außenluft schräg von links oben nach rechts unten durchströmt und von der Abluft schräg von links unten nach rechts oben. Die Abluftströme durch den Wärmetauscher 27 und den Abluftbypass 29 sind in Fig. 5 der Übersichtlichkeit halber nicht dargestellt. Unterhalb des Wärmetauschers befindet sich die Umluftklappe 39, mit der Abluft aus einem Bereich vor dem Wärmetauscher 27 in den Strom der (konditionierten) Außenluft gemischt werden kann, bevor diese in den zweiten Wärmetauscher 32 eintritt. Die Umluftklappe 29 ist vollständig verschließbar (reiner Außenluftbetrieb) bzw. vollständig zu öffnen, wobei sich bei geschlossener Fortluftklappe 28 sowie gleichfalls geschlossener Wärmerückgewinnungsklappe 34 und Bypassklappe 35 ein reiner Umluftbetrieb ergibt.

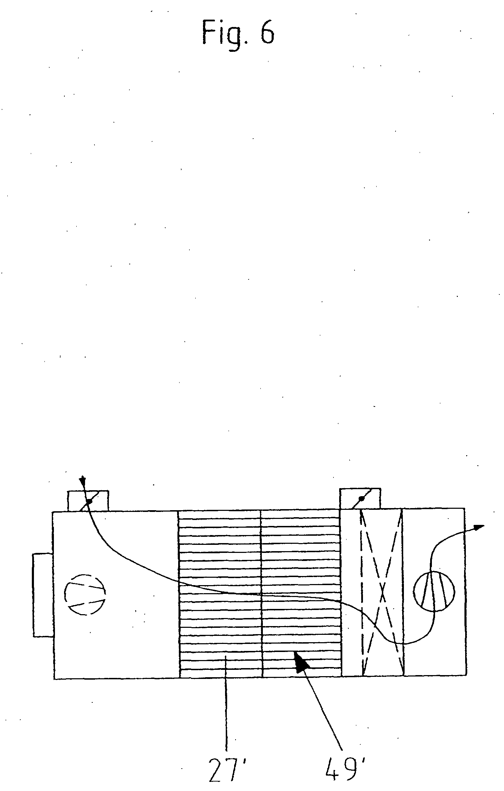

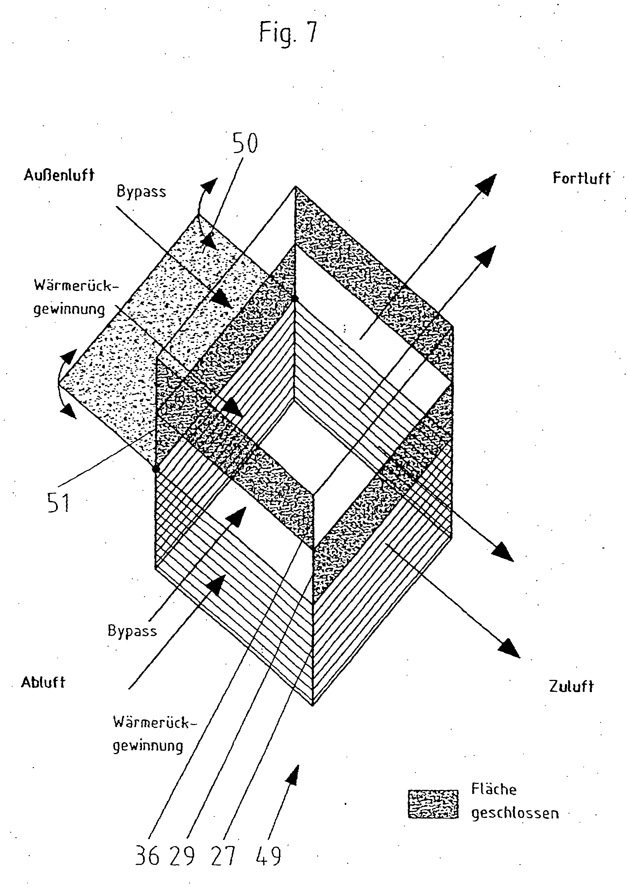

Fig. 7 zeigt eine aus Wärmetauscher 27, Abluftbypass 29 und Außenluftbypass 36 gebildete, insgesamt quaderförmige Baueinheit 49. Sowohl der Wärmetauscher 27, der Abluftbypass 29 als auch der Außenluftbypass 36 besitzen eine quaderförmige Gestalt mit jeweils derselben Grundfläche und sind stapelförmig über- bzw. nebeneinander angeordnet. Sämtliche Strömungen erfolgen in Ebenen parallel zueinander. Je nach Stellung einer kombinierten Wärmerückgewinnungs-Bypassklappe 50, die an einer Seitenwand 51 der Baueinheit 49 angelenkt ist, werden mehr oder weniger große Anteile der Außenluft durch den Wärmetauscher 27 und den Außenluftbypass 36 geführt. Der Abluftbypass 29, der unmittelbar an den Wärmetauscher 27 angrenzt, ist in seinem wirksamen Querschnitt nicht einstellbar. Das Volumenstromverhältnis ergibt sich aufgrund der jeweiligen Strömungswiderstände für die Abluftströmung. Die Baueinheit 49 ist als solche als zusammenhängendes Teil in das Gehäuse 48 der Vorrichtung einsetzbar und wieder daraus entnehmbar. Hieraus ergibt sich zum einen der Vorteil einer besonders leichten Reinigbarkeit. Zum anderen läßt sich Baueinheit 49 aber auch durch eine solche in Fig. 6 dargestellte Baueinheit 49' ersetzen, bei der sowohl der Abluftbypass als auch der Außenluftbypass weggefallen sind und das frei gewordene Volumen von einem vergrößerten Wärmetauscher 27' ausgefüllt ist. Auf diese Weise läßt sich eine höhere Wärmerückgewinnungsrate erzielen, was insbesondere bei Räumen mit hoher Personenbelegung sinnvoll sein kann, da in diesem Fall die Vorrichtung häufig im reinen Außenluftbetrieb genutzt wird. Aufgrund der einfachen Austauschbarkeit der Baueinheit 49 bzw. 49' läßt sich mit einer in ihrer Grundkonzeption unveränderten Vorrichtung einer Vielzahl von Anforderungen gerecht werden.

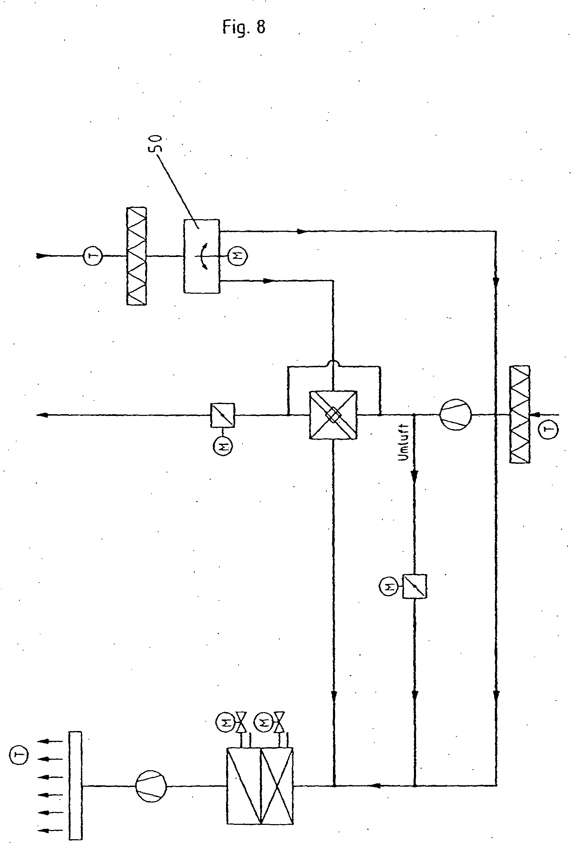

In Fig. 8 ist schließlich noch das Schaubild einer Vorrichtung dargestellt, bei der anstelle jeweils einer separaten Außenluftklappe und Wärmerückgewinnungsklappe eine kombinierte Wärmerückgewinnungs-Bypassklappe 50 verwendet wird. Die konstruktive Ausführung einer derartigen kombinierten Wärmerückgewinnungs-Bypassklappe 50 ist beispielhaft in Fig 7 dargestellt.

Nachfolgend werden mögliche Betriebszustände der Vorrichtung unter Bezugnahme auf das Schaltbild gemäß Fig. 2 näher erläutert:

Im reinen Außenluftbetrieb wird die Außenluft bei geschlossener Wärmerückgewinnungsklappe 34 und geöffneter Bypassklappe 35 an dem ersten Wärmetauscher 27 vorbei unmittelbar zu dem zweiten Wärmetauscher 32 und von dort über die Zuluftfördereinrichtung 33 in den Raum geführt. Die Fortluft aus dem Raum strömt zum Teil über den Wärmetauscher 27 und zum Teil über den Fortluftbypass 29 in die Umgebung. In diesem Betriebsfall besteht außenluftseitig kein Bedarf an Wärmerückgewinnung, weil beispielsweise in der Übergangszeit bei einer Außenlufttemperatur von 15°C und internen Wärmelasten in dem zu temperierenden Raum eine Kühlung verlangt wird. Diese ist in diesem Fall ohne Aktivierung des Kühlregisters 32" möglich. Die abluftseitige Luftführung teilweise durch den Wärmetauscher 27 ist unschädlich, da einerseits aufgrund des festen Abluftbypass 29 eine Druckentlastung der Abluftfördereinrichtung 25 und andererseits aufgrund der geschlossenen Wärmerückgewinnungsklappe 34 keine unerwünschte Erwärmung der Außenluft bewirkt wird.

Im kombinierten Außen- und Umluftbetrieb ohne Wärmerückgewinnung wird bei teilweise geöffneter Umluftklappe 39 und teilweise geschlossener Fortluftklappe 28 ein Teil der Abluft als Umluft dem Raum wieder zugeführt. Für Verwaltungsgebäude ist bei üblicher Belegung mit einer Person pro 10² m Bodenfläche der zur Wärmeabfuhr erforderliche Luftvolumenstrom wesentlich höher als der aus hygienischen Gründen erforderliche Außenluftvolumenstrom. Deshalb ist bei abnehmendem Kühlfall zuerst eine Reduktion des Außenluftanteils zugunsten eines höheren Umluftanteils durch entsprechendes Öffnen der Umluftklappe 39 und Schließen der Bypassklappe 35 sinnvoll. Erst wenn bei abnehmender Temperatur der Außenluft die Wärmeverluste des Raumes die Wärmegewinne durch interne Belastungen übersteigen, wird die Wärmerückgewinnung mit Hilfe des ersten Wärmetauschers 25 in Betrieb genommen.

Im kombinierten Außen- und Umluftbetrieb mit Wärmerückgewinnung ist die Wärmerückgewinnungsklappe 34 geöffnet und die Bypassklappe 35 geschlossen. Die Außenluft wird über den Wärmetauscher 27 geleitet und vorgewärmt. Wenn die Zulufttemperatur trotz Wärmerückgewinnung zu gering ist, kann über das Heizregister 32' nachgeheizt werden.

Der reine Umluftbetrieb, bei dem die Fortluftklappe 28 vollständig geschlossen und die Umluftklappe 39 vollständig geöffnet ist, dient dazu, das Gebäude bei Abwesenheit der Nutzer (Wochenende) auf einem vorgegebenen Temperaturniveau zu halten. Außenluft ist in diesem Fall nicht erforderlich und würde für die Beheizung im Winter lediglich zu einem Mehrverbrauch an Energie führen. Je nach Jahreszeit wird die über den zweiten Wärmetauscher 32 geführte Umluft beheizt oder gekühlt. Je nach gewünschter Förderleistung können die Abluftfördereinrichtung 25 und die in Reihe hierzu geschaltete Zuluftfördereinrichtung 33 einzeln oder gemeinsam betrieben werden. Beim gemeinsamen Betrieb läßt sich die Aufheizphase am Morgen verkürzen. Die Nachtabsenkung der Raumtemperatur kann so länger aufrechterhalten werden, wodurch Energie eingespart wird.

Schließlich wird ein besonderer Betriebsfall noch von der sogenannten Sommernachtskühlung gebildet, bei der der Raum mit Außenluft in der Nacht für den nächsten Tag vorgekühlt wird. Die Bypassklappe 35 ist in diesem Fall vollständig geöffnet und die Wärmerückgewinnungsklappe 34 vollständig geschlossen. Aus Gründen der Energieersparnis wird nur die Zuluftfördereinrichtung 33, nicht jedoch die Abluftfördereinrichtung 25 betrieben, wodurch sich in dem betreffenden Raum ein Überdruck bildet, weshalb es zu einer Überströmung der kühlen Nachtluft, beispielsweise auch in benachbarte Flure, kommt.

## Patentansprüche

1. Vorrichtung (10, 10') zur Temperierung und/oder Belüftung eines Raumes (6) in einem Gebäude (1) und zur Anordnung in oder in der Nähe einer Fassade (3), die den Raum (6) von der äußeren Umgebung (2) des Gebäudes (1) trennt, mit
- einem Außenlufteinlaß (11), durch den Außenluft über einen ersten Wärmetauscher (27) zur Energierückgewinnung aus der Abluft und über einen zweiten Wärmetauscher (32) zur weiteren Temperierung führbar und durch einen Zuluftauslaß (14) in den Raum abgebbar ist,
- einem Ablufteinlaß (16), durch den Abluft aus dem Raum (6) über den ersten Wärmetauscher (27) zu einem Fortluftauslaß (18) führbar und dort an die Umgebung (2) abgebbar ist,
- einem im Abluftstrom vor dem ersten Wärmetauscher (27) abzweigenden und im Zuluftstrom hinter diesem einmündenden Umluftbypass (37), durch den Abluft als Umluft zu dem Zuluftauslaß (14) führbar ist, wobei der freie Querschnitt des Umluftbypaß (37) mittels einer Verstelleinrichtung veränderbar ist, und
- mehreren Luftfördereinrichtungen (25, 33) für eine aktive Luftführung,
**dadurch gekennzeichnet, daß** eine Abluftfördereinrichtung (25) zwischen dem Ablufteinlaß (16) und dem Abzweig (26) des Umluftbypass (37) aus einem Abluftkanal und eine Zuluftfördereinrichtung (33) zwischen einer Einmündung des Umluftbypass (37) in einen Zuluftkanal und dem Zuluftauslaß (14) angeordnet ist.

2. Vorrichtung nach Anspruch 1, **dadurch gekennzeichnet, daß** die Außenluft über einen Außenluftbypass (36) an einem ersten Wärmetauscher (27) vorbei zu dem zweiten Wärmetauscher (32) führbar ist.

3. Vorrichtung nach Anspruch 2, **dadurch gekennzeichnet, daß** das Verhältnis des durch den ersten Wärmetauscher (27) geführten Luftvolumenstroms zu dem durch den Außenluftbypass (36) geführten Luftvolumenstrom einstellbar ist.

4. Vorrichtung nach Anspruch 3, **dadurch gekennzeichnet, daß** eine Wärmerückgewinnung-Bypassklappe (50) für die Außenluft wahlweise den Einlaßquerschnitt des ersten Wärmetauschers (27) oder den Außenluftbypass (36) versperrt oder in Zwischenstellungen eine variable Verteilung der Außenluft auf den ersten Wärmetauscher (27) und den Außenluftbypass (36) erlaubt.

5. Vorrichtung nach einem der Ansprüche 1 bis 4, **dadurch gekennzeichnet, daß** Abluft über einen Abluftbypass (29) an einem einem ersten Wärmetauscher (27) vorbei führbar ist.

6. Vorrichtung nach Anspruch 5, **dadurch gekennzeichnet, daß** der Abluftbypass (29) einen unveränderlichen Querschnitt besitzt und vor einer Fortluftklappe (25) in einen Kanal mündet, durch den die Abluft aus dem ersten Wärmetauscher (27) führbar ist.

7. Vorrichtung nach dem Oberbegriff von Anspruch 1, **dadurch gekennzeichnet, daß** der erste Wärmetauscher (27) gemeinsam mit dem Außenluftbypass (36) und/oder dem Abluftbypass (29) eine als solche aus der Vorrichtung (10, 10') entnehmbare Baueinheit (49, 49') bildet.

8. Vorrichtung nach Anspruch 7, **dadurch gekennzeichnet, daß** eine Seitenwand des Außenluftbypass (36) und/oder Abluftbypass (29) von jeweils einer Wand eines Gehäuses (48) der Vorrichtung (10, 10') und/oder des Wärmetauschers (27) gebildet wird.

9. Vorrichtung nach Anspruch 7 oder 8, **dadurch gekennzeichnet, daß** die Baueinheit (49, 49') quaderförmig ist und aus einem quaderförmigen Plattenwärmetauscher und einem jeweils dieselbe Grundfläche aufweisenden quaderförmigen Außenluftbypass (36) und Abluftbypass (29) besteht, wobei die Strömungen durch den Plattenwärmetauscher, den Außenluftbypass (36) und den Abluftbypass (29) in zueinander parallelen Ebenen verlaufen und die Strömungen durch den Außenluftbypass (36) und den Abluftbypass (29) einen Winkel von 90° miteinander einschließen.

10. Vorrichtung nach einem der Ansprüche 1 bis 9, **dadurch gekennzeichnet, daß** der zweite Wärmetauscher (32) ein Heizregister (32') und ein Kühlregister (32") aufweist.

11. Vorrichtung nach einem der Ansprüche 1 bis 10, **dadurch gekennzeichnet, daß** ein Außenluftstutzen (13') zwei Einlaßöffnungen (47Z und 47U) aufweist, von denen eine Luft aus einem Zwischenraum (43) zwischen der Fassade (3) und einer dieser vorgelagerten Außenschale (42) und eine andere Außenluft aus der die Außenschale (42) umgebenden Umgebung (2) ansaugt, wobei die wirksamen Öffnungsquerschnitte beider Einlaßöffnungen (47Z, 47U) unabhängig voneinander einstellbar sind.

## Claims

1. An apparatus (10, 10') for tempering and/or ventilating a room (6) in a building (1) and for arrangement in or close to a façade (3) which separates the room (6) from the outside environment (2) of the building (1), with
- an external air inlet (11) through which external air can be guided via a first heat exchanger (27) for energy recovery from the exhaust air and via a second heat exchanger (32) for further tempering and can be supplied into the room through an air supply outlet (14);
- an exhaust air inlet (16) through which exhaust air can be guided from the room (6) via the first heat exchanger (27) to escape air outlet (18) and can be supplied there to the ambient environment (2);
- a recirculation air by-pass (37) which branches in the exhaust air stream before the first heat exchanger (27) and opens in the air supply stream behind the same and by which the exhaust air can be guided as recirculation air to the air supply outlet (14), with the free cross section of the recirculation air by-pass (37) being changeable by means of an adjusting device, and
- several air conveying devices (25, 33) for active air guidance;
**characterized in that** an exhaust air conveying device (25) is arranged between the exhaust air inlet (16) and the branch (26) of the recirculation air by-pass (37) from an exhaust air conduit and an air supply conveying device (33) is arranged between an opening of the recirculation air by-pass (37) into an air supply conduit and the air supply outlet (14).

2. An apparatus as claimed in claim 1, **characterized in that** the external air can be guided via an external air by-pass (36) past a first heat exchanger (27) to the second heat exchanger (32).

3. An apparatus as claimed in claim 2, **characterized in that** the ratio of the air volume flow guided through the first heat exchanger (27) is adjustable to the air volume flow guided through the external air by-pass (36).

4. An apparatus as claimed in claim 3, **characterized in that** heat recovery by-pass flap (50) for the external air optionally blocks the inlet cross section of the first heat exchanger (27) or the external air by-pass (36) or, in an intermediate position, allows a variable distribution of the external air to the first heat exchanger (27) and the external air by-pass (36).

5. An apparatus as claimed in one of the claims 1 to 4, **characterized in that** exhaust air can be guided via an exhaust air by-pass (29) past a first heat exchanger (27).

6. An apparatus as claimed in claim 5, **characterized in that** the exhaust by-pass (29) has an unchangeable cross section and opens before an escape air flap (25) into a conduit through which the exhaust air can be guided from the first heat exchanger (27).

7. An apparatus as claimed in the preamble of claim 1, **characterized in that** the first heat exchanger (27) forms jointly with the external air by-pass (36) and/or the exhaust air by-pass (29) a modular unit (49, 49' ) which is removable per se from the apparatus (10, 10').

8. An apparatus as claimed in claim 7, **characterized in that** one side wall of the external air by-pass (36) and/or the exhaust air by-pass (29) are formed by a wall each of a housing (48) of the apparatus (10, 10') and/or the heat exchanger (27).

9. An apparatus as claimed in claim 7 or 8, **characterized in that** the modular unit (49, 49') is cuboid-shaped and consists of a cuboid-shaped plate heat exchanger and a cuboid-shaped external air by-pass (36) and exhaust air by-pass (29) each having the same base surface area, with the flows through the plate heat exchanger, the external air by-pass (36) and the exhaust air by-pass (29) extending in mutually parallel planes and the flows through the external air by-pass (36) and the exhaust air by-pass (29) mutually enclosing an angle of 90° with each other.

10. An apparatus as claimed in one of the claims 1 to 9, **characterized in that** the second heat exchanger (32) comprises a heating register (32') and a cooling register (32").

11. An apparatus as claimed in one of the claims 1 to 10, **characterized in that** a connection piece (13') for the external air comprises two inlet openings (47Z and 47U), of which one takes in air from an intermediate space (43) between the façade (3) and an outer shell (42) upstream of the same and the other takes in external air from the ambient environment (2) enclosing the outer shell (42), with the effective opening cross sections of both inlet openings (47Z, 47U) being adjustable independent of each other.

## Revendications

1. Dispositif (10, 10') pour la régulation de la température et/ou l'aération d'une pièce (6) dans un bâtiment (1), destiné à être disposé dans ou à proximité d'une façade (3) séparant la pièce (6) de l'environnement extérieur (2) du bâtiment (1), avec
- une entrée d'air extérieur (11), par laquelle de l'air extérieur peut être guidé à travers un premier échangeur de chaleur (27) pour la récupération d'énergie à partir de l'air sortant et un deuxième échangeur de chaleur (32) pour une régulation plus poussée de la température et peut être libéré dans la pièce par une sortie d'air amené (14),
- une entrée d'air sortant (16), par laquelle l'air sortant peut être guidé hors de la pièce (6) en passant par le premier échangeur de chaleur (27) vers une sortie d'extraction d'air (18) et rejeté par celle-ci dans l'environnement (2),
- une dérivation d'air recyclé (37) bifurquant dans le flux d'air sortant avant le premier échangeur de chaleur (27) et débouchant dans le flux d'air amené après celui-ci, par laquelle l'air sortant peut aller vers la sortie d'air amené (14) sous forme d'air recyclé, la section libre de la dérivation d'air recyclé (37) pouvant être modifiée au moyen d'un dispositif de réglage, et
- plusieurs dispositifs de déplacement de l'air (25, 33) pour un guidage actif de l'air,
**caractérisé en ce qu'**il est prévu un dispositif de déplacement de l'air sortant (25) entre l'entrée d'air sortant (16) et la bifurcation (26) de la dérivation d'air recyclé (37) à partir d'un canal d'air sortant et un dispositif de déplacement de l'air (33) entre une embouchure de la dérivation d'air recyclé (37) dans un canal d'air amené et la sortie d'air amené (14).

2. Dispositif selon la revendication 1, **caractérisé en ce que** l'air extérieur peut être amené par une dérivation d'air extérieur (36) au deuxième échangeur de chaleur (32) en contournant le premier échangeur de chaleur (27).

3. Dispositif selon la revendication 2, **caractérisé en ce que** le rapport entre le débit d'air passant par le premier échangeur de chaleur (27) et le débit d'air passant par la dérivation d'air extérieur (36) est réglable.

4. Dispositif selon la revendication 3, **caractérisé en ce qu'**un volet de dérivation de récupération de chaleur (50) empêche sélectivement l'air sortant de pénétrer dans la section d'admission du premier échangeur de chaleur (27) ou dans la dérivation d'air extérieur (36) ou permet une distribution variable de l'air extérieur vers le premier échangeur de chaleur (27) et la dérivation d'air extérieur (36).

5. Dispositif selon l'une quelconque des revendications 1 à 4, **caractérisé en ce que** l'air sortant peut être acheminé par une dérivation d'air sortant (29) en contournant un premier échangeur de chaleur (27).

6. Dispositif selon la revendication 5, **caractérisé en ce que** la dérivation d'air sortant (29) possède une section invariable et débouche avant un volet d'extraction d'air (25) dans un canal par lequel l'air sortant peut être amené à partir du premier échangeur de chaleur (27).

7. Dispositif selon le préambule de la revendication 1, **caractérisé en ce que** le premier échangeur de chaleur (27) forme avec la dérivation d'air extérieur (36) et/ou la dérivation d'air sortant (29) une unité constructive (49, 49') pouvant être retirée d'un seul tenant du dispositif (10, 10').

8. Dispositif selon la revendication 7, **caractérisé en ce qu'**une paroi latérale de la dérivation d'air extérieur (36) et/ou de la dérivation d'air sortant (29) est formée par une paroi d'un boîtier (48) du dispositif (10, 10') et/ou de l'échangeur de chaleur (27).

9. Dispositif selon la revendication 7 ou 8, **caractérisé en ce que** l'unité constructive (49, 49') est carrée et se compose d'un échangeur de chaleur à plaques et d'une dérivation d'air extérieur (36) et d'une dérivation d'air sortant (29) carrées ayant la même surface en plan, les flux qui traversent l'échangeur de chaleur à plaques, la dérivation d'air extérieur (36) et la dérivation d'air sortant (29) circulant dans des plans parallèles et les flux qui traversent la dérivation d'air extérieur (36) et la dérivation d'air sortant (29) formant l'un par rapport à l'autre un angle de 90°.

10. Dispositif selon l'une quelconque des revendications 1 à 9, **caractérisé en ce que** le deuxième échangeur de chaleur (32) présente un registre de chauffage (32') et un registre de refroidissement (32").

11. Dispositif selon l'une quelconque des revendications 1 à 10, **caractérisé en ce qu'**un piquage d'air extérieur (13') présente deux ouvertures d'entrée (47Z et 47U) dont l'une aspire de l'air à partir d'un espace intermédiaire (43) entre la façade (3) et un revêtement extérieur (42) situé devant celle-ci et une autre aspire de l'air extérieur dans l'environnement (2) entourant le revêtement extérieur (42), les sections d'ouverture efficaces des deux ouvertures d'entrée (47Z, 47U) étant réglables indépendamment l'une de l'autre.
